(19) Europäisches Patentamt
European Patent Office
Office européen des brevets

(11) **EP 3 859 982 A1**

(12) **EUROPEAN PATENT APPLICATION**
published in accordance with Art. 153(4) EPC

(43) Date of publication:
**04.08.2021 Bulletin 2021/31**

(51) Int Cl.:
***H04B 1/713*** *(2011.01)*

(21) Application number: **19877421.8**

(86) International application number:
**PCT/CN2019/107883**

(22) Date of filing: **25.09.2019**

(87) International publication number:
**WO 2020/082970 (30.04.2020 Gazette 2020/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.10.2018 CN 201811236851**

(71) Applicant: **GUANGDONG OPPO MOBILE TELECOMMUNICATIONS CORP., LTD.**
**Dongguan Guangdong 523860 (CN)**

(72) Inventor: **JIANG, Guoqiang**
**Dongguan, Guangdong 523860 (CN)**

(74) Representative: **Manitz Finsterwald**
**Patent- und Rechtsanwaltspartnerschaft mbB**
**Martin-Greif-Strasse 1**
**80336 München (DE)**

(54) **ELECTROMAGNETIC INTERFERENCE CONTROL METHOD AND RELATED APPARATUS**

(57)     Disclosed are an electromagnetic interference control method and a related apparatus. The method comprises: when it is detected that an electronic device is in a preset scenario, detecting whether electromagnetic interference occurs between a radio-frequency system of the electronic device and a display screen, wherein the preset scenario comprises a screen-on scenario; and when it is detected that the electronic device is subjected to electromagnetic interference, executing a frequency hopping switching operation on a mobile industry processor interface (MIPI) of the display screen. The present application facilitates an improvement in the stability of communications in a screen-on scenario.

the electronic device detects whether electromagnetic interference occurs between a radio frequency system and a display screen of an electronic device in response to detecting that the electronic device is in a preset scene — S201

the electronic device performs a frequency hopping switching operation on a mobile industry processor interface (MIPI) of the display screen in response to detecting that the electromagnetic interference occurs in the electronic device — S202

FIG. 2

## Description

**FIELD**

The disclosure relates to a field of electronic device technologies, and more particularly to a method for controlling electromagnetic interference and a related apparatus.

**BACKGROUND**

With the development of mobile communication technologies, a user has a greater requirement for communication with an electronic device such as a mobile phone. Presently, data is generally transmitted through cellular mobile network communication or Wi-Fi communication when the electronic device on the market performs data transmission. Most full-screen mobile phones face a radio frequency interference problem. That is, a driver integrated chip of a display has extended to an antenna clearance area, and a frequency-division and frequency-multiplication point of a mobile industry processor interface (MIPI) frequency of the display interferes with a radio frequency antenna, causing a low receiving total isotropic sensitivity (TIS) of the antenna.

**SUMMARY**

Embodiments of the disclosure provide a method for controlling electromagnetic interference and a related apparatus, to improve communication stability of an electronic device in a screen-on scene.

In a first aspect, embodiments of the disclosure provide a method for controlling electromagnetic interference. The method includes: detecting whether electromagnetic interference occurs between a radio frequency system and a display screen of an electronic device in response to detecting that the electronic device is in a preset scene, the preset scene including a screen-on scene; and performing a frequency hopping switching operation on a mobile industry processor interface (MIPI) of the display screen in response to detecting that the electromagnetic interference occurs in the electronic device.

In a second aspect, embodiments of the disclosure provide an apparatus for controlling electromagnetic interference. The apparatus includes: a processing unit and a communication unit.

The processing unit is configured to detect whether electromagnetic interference occurs between a radio frequency system and a display screen of an electronic device in response to detecting that the electronic device is in a preset scene, the preset scene including a screen-on scene, and to perform a frequency hopping switching operation on a mobile industry processor interface (MIPI) of the display screen through the communication unit in response to detecting that the electromagnetic interference occurs in the electronic device.

In a third aspect, embodiments of the disclosure provide an electronic device. The electronic device includes: a processor, a memory, a communication interface; and one or more programs. The one or more programs are stored in the memory and configured to be executed by the processor. The one or more programs include instructions for executing the method according to the first aspect of embodiments of the disclosure.

In a fourth aspect, embodiments of the disclosure provide a computer readable storage medium, having a computer program for exchanging electronic data stored thereon. The computer program causes a computer to execute the method according to the first aspect of embodiments of the disclosure.

In a fifth aspect, embodiments of the disclosure provide a computer program product. The computer program product includes a non-transitory computer readable storage medium having a computer program stored thereon. The computer program may be operated to enable a computer to execute a part or all of the method according to the first aspect of embodiments of the disclosure. The computer program product may be a software installation package.

It may be seen that, in embodiments of the disclosure, the electronic device detects whether the electromagnetic interference occurs between the radio frequency system and the display screen of the electronic device in response to detecting that the electronic device is in the preset scene. The preset scene includes a screen-on scene. The frequency hopping switching operation is performed on the MIPI of the display screen in response to detecting that the electromagnetic interference occurs in the electronic device. Since the electronic device performs frequency hopping on the MIPI frequency of the display screen, the MIPI frequency of the display screen may be adjusted to a frequency band which does not interfere with a communication frequency of the radio frequency system, thereby improving the communication stability in the screen-on scene.

**BRIEF DESCRIPTION OF THE DRAWINGS**

In order to more clearly illustrate technical solutions of embodiments of the disclosure or the related art, a brief description of accompanying drawings used in embodiments or the related art is given below. Obviously, the accompanying drawings in the following descriptions are only part embodiments of the disclosure, and for those skilled in the art, other accompanying drawings can be obtained according to these accompanying drawings without creative labor.

FIG. 1 is a schematic diagram illustrating a wireless communication system according to embodiments of the disclosure.
FIG. 2 is a flow chart illustrating a method for controlling electromagnetic interference according to embodiments of the disclosure.
FIG. 3 is a flow chart illustrating a method for controlling electromagnetic interference according to another embodiment of the disclosure.
FIG. 4 is a flow chart illustrating a method for controlling electromagnetic interference according to another embodiment of the disclosure.
FIG. 5 is a block diagram illustrating an electronic device according to embodiments of the disclosure.
FIG. 6 is a block diagram illustrating a composition of function units of an apparatus for controlling electromagnetic interference according to embodiments of the disclosure.

## DETAILED DESCRIPTION

In order to enable the skilled in the art better understand the technical solution of the disclosure, description will be made clearly and completely below to the technical solution in embodiments of the disclosure with reference to accompanying drawings in embodiments of the disclosure. Obviously, the embodiments described in the accompanying drawings are only a part of embodiments of the disclosure, but not all the embodiments. Based on the embodiments in the disclosure, all other embodiments obtained by the skilled in the art without creative labor belong to the protection scope of the disclosure.

The terms "first", "second", and the like in the specification, and claims and the above accompanying drawings of the disclosure are used to distinguish different objects, but not to describe a specific order. Furthermore, the term "including" and "have" and any variations thereof are intended to cover non-exclusive inclusion. For example, a process, method, system, product or device including a series of steps or units is not limited to listed steps or units, but alternatively includes steps or units not listed, or alternatively includes other steps or units inherent to the process, method, product or device.

Reference to an "embodiment" herein means that a particular feature, structure or characteristic described in connection with the embodiment may be included in at least one embodiment of the disclosure. The appearance of the "embodiment" in various places in the specification does not necessarily mean the same embodiment, nor is it an independent or alternative embodiment mutually exclusive with other embodiments. The skilled in the art explicitly and implicitly understands that embodiments described herein may be combined with other embodiments.

An electronic device involved in embodiments of the disclosure may be an electronic device with data transmission capability. The electronic device may include a handheld device, a vehicle-mounted device, a wearable device, a computing device with a wireless communication function, or other processing devices connected with a wireless modem, and various forms of user equipment (UE), a mobile station (MS), a terminal device, and the like. Description will be made in detail below to embodiments of the disclosure.

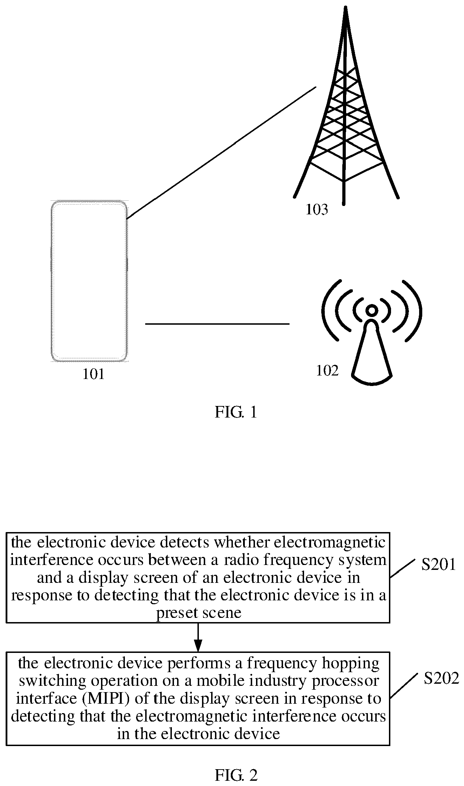

As illustrated in FIG. 1, an electronic device 101 may be connected with a base station 103 and/or a wireless hotspot device 102. A voice call service, such as a voice call service presently in long term evolution (LTE), may be implemented via a mobile communication network when the electronic device 101 is connected with the base station 103. A voice call service, such as an IP multimedia subsystem (IMS) voice call service, may be implemented via a wireless local area network when the electronic device 101 is connected with the wireless hotspot device 102.

As illustrated in FIG. 2, FIG. 2 is a flow chart illustrating a method for controlling electromagnetic interference according to embodiments of the disclosure. The method is applied to an electronic device. As illustrated in FIG. 2, the method for controlling the electromagnetic interference includes the following.

At block 201, the electronic device detects whether electromagnetic interference occurs between a radio frequency system and a display screen of the electronic device in response to detecting that the electronic device is in a preset scene. The preset scene includes a screen-on scene.

When the electronic device communicates with the base station or the wireless hotspot, the radio frequency system may select different communication channels for information transmission of services such as data and voice. Each communication channel corresponds to a frequency domain resource (such as a global system for mobile communication (GSM) frequency band, or a long term evolution (LTE) B8/B20/B28 frequency band) agreed by a protocol. It may be known from a relevant communication protocol that, the electronic device may use one or more different communication channels in a same service processing period when executing different service procedures. For example, different channels of a current home location may be scanned during cell handover. The preset scene may include a screen-on call scene, a screen-on video scene, and the like, which is not uniquely limited here.

At block 202, the electronic device performs a frequency hopping switching operation on a mobile industry processor interface (MIPI) of the display screen in response to detecting that the electromagnetic interference occurs in the electronic device.

The MIPI frequency of the display screen may support different frequencies or frequency bands based on a chip capability, such as a frequency of 514.5MHz or 512.5MHz.

It may be seen that, in embodiments of the disclosure, the electronic device detects whether the electromagnetic interference occurs between the radio frequency system and the display screen of the electronic device in response to detecting that the electronic device is in the preset scene. The preset scene includes the screen-on scene. The frequency hopping switching operation is performed on the MIPI of the display screen in response to detecting that the electromagnetic interference occurs in the electronic device. Since the electronic device performs frequency hopping on the MIPI frequency of the display screen, the MIPI frequency of the display screen may be adjusted to a frequency band which does not interfere with a communication frequency of the radio frequency (RF) system, thereby improving the communication stability in the screen-on scene.

In a possible example, that the electronic device detects whether the electromagnetic interference occurs between the radio frequency system and the display screen of the electronic device includes the following. The electronic device obtains at least one detection value of a first frequency and a detection value of a second frequency. The first frequency is a communication frequency of the radio frequency system, and the second frequency is the MIPI frequency of the display screen. It is detected whether the electromagnetic interference occurs between the radio frequency system and the display screen of the electronic device based on the at least one detection value of the first frequency and the detection value of the second frequency.

In a detailed implementation, the electronic device compares the detection value of the second frequency with each detection value of the first frequency to determine whether the electromagnetic interference may occur.

It may be seen that, in this example, the electronic device may quickly determine whether a frequency currently used by the MIPI of the display screen may cause the electromagnetic interference with any detection value in the first frequency based on frequency comparison, thereby quickly positioning an electromagnetic interference scene based on a real-time detection value, and improving a detection efficiency.

In a possible example, that the electronic device detects whether the electromagnetic interference occurs between the radio frequency system and the display screen of the electronic device based on the at least one detection value of the first frequency and the detection value of the second frequency includes the following. The electronic device determines a first frequency set based on the at least one detection value of the first frequency. The first frequency set includes at least one communication frequency enabled by the radio frequency system in the preset scene. A second frequency set is determined based on the detection value of the second frequency. The second frequency set includes an MIPI frequency enabled by the display screen in the preset scene, and at least one division frequency and/or at least one multiplication frequency of the enabled MIPI frequency. It is detected whether the electromagnetic interference occurs between the radio frequency system and the display screen of the electronic device based on the first frequency set and the second frequency set.

Since a variety of different business procedures may be performed during an actual use of the electronic device, the number of different frequencies included in the first frequency set needs to be detected and determined in real time.

In a detailed implementation, for each frequency in the second frequency set, the electronic device may compare the frequency with the respective frequencies in the first frequency set one by one. When there is an interference frequency, it is determined that there is the electromagnetic interference. When there is no interference frequency, it is determined that there is no electromagnetic interference.

It may be seen that, in this example, since the multiplication frequency or the division frequency of the MIPI frequency of the display screen may also interfere with a device with a similar frequency band and cause the electromagnetic interference, an electromagnetic interference situation may be comprehensively and accurately detected by performing frequency comparison in the first frequency set and the second frequency set, thereby improving the detection accuracy and comprehensiveness.

In a possible example, that the electronic device performs the frequency hopping switching operation on the MIPI of the display screen includes the following. The electronic device determines a target frequency value of an MIPI frequency of the display screen, and adjusts the MIPI frequency of the display screen to the target frequency value.

It may be understood that, there may be various ways for determining the target frequency value of the MIPI frequency of the display screen. A detailed constraint condition may include a supporting by capability of a display screen chip, which is not uniquely limited here.

It may be seen that, in this example, after the electronic device determines that the electromagnetic interference occurs, the target frequency value for the hopping frequency is determined in real time, the MIPI frequency of the display screen is adjusted to the target frequency value. Comparing with adjusting the communication frequency of the radio frequency system, the processing process is convenient and efficient, with low delay and high stability.

In a possible example, that the electronic device determines the target frequency value of the MIPI frequency of the display screen includes the following. The electronic device obtains an available frequency range or an available frequency value of the MIPI frequency of the display screen. A first frequency set is obtained. The first frequency set includes at least one communication frequency enabled by the electronic device in the preset scene. The target frequency value of the MIPI frequency of the display screen is determined based on the available frequency range or the available frequency value, and the first frequency set.

In a detailed implementation, the target frequency value determined by the electronic device may rarely have electromagnetic interference with any frequency in the first frequency set.

It may be seen that, in this example, since the electronic device determines the target frequency value of the MIPI based on the available frequency range or the available frequency value of the MIPI of the display screen, and the first frequency set, the electronic device is prevented from being interfered by the MIPI of the display screen in a current preset scene due to the radio frequency system using any frequency in the first frequency set, thereby improving the communication stability of the radio frequency system.

In a possible example, that the electronic device adjusts the MIPI frequency of the display screen to the target frequency value includes the following. The electronic device obtains a pre-configured target value of a screen parameter associated with the target frequency value. The target value is associated with a reference value. The reference value is determined by the electronic device under a first constraint condition based on a preset FPS (frames per second) calculation equation and the target frequency value. The first constraint condition refers to that a change amount of FPS of the display screen after MIPI frequency switching is lower than a first preset threshold, and the screen parameter includes at least one porch value of a horizontal back porch (HBP), a horizontal front porch (HFP), a vertical back porch (VBP), a vertical front porch (VFP), a vertical sync active (VSA), a horizontal sync active (HAS) in the preset FPS calculation equation. A value of the screen parameter is adjusted to the target value, and adjusting the MIPI frequency of the display screen to the target frequency value.

The preset FPS calculation equation is as follows.

$$FPS = CLK\_rate \times 2 \times lane\_num / ((height+VBP+VSA+VFP) \times (weight+HBP+HFP+HSA) \times bits\_perpixel),$$

where, FPS represents the frames per second of the display screen, CLK_rate represents the MIPI frequency, lane_num represents the number of channels, and height and weight represent a physical size of the display screen, VBP represents the number of invalid lines after a vertical synchronization signal at the start of an image, VFB represents the number of invalid lines before the vertical synchronization signal after the end of the image, VSA represents a width of the vertical synchronization signal, i.e. the vertical sync active, HBP represents the number of clocks between a start of a horizontal synchronization signal and a start of a line of valid data, HFP represents the number of clocks between an end of the line of valid data and a start of a following horizontal synchronization signal, HSA represents a width of the horizontal synchronization signal, i.e., the horizontal sync active, and bits_perpixel represents a width of RGB (red green blue) display data.

The first preset threshold may be an empirical value, which is used to ensure the stability of content displayed on the display screen before and after the frequency hopping switching operation. For example, the first preset threshold may be 1% of a maximum allowable error range of the display screen chip.

It may be seen that, in this example, a part of parameters of the display screen of the electronic device may change after the frequency hopping switching operation is performed, and the FPS is a parameter index to ensure the display stability of the display screen after the frequency hopping switching operation. Therefore, the electronic device may predetermine the target value of the screen parameter that needs to be adjusted synchronously during the frequency hopping switching operation based on the preset FPS calculation equation, thereby improving the display stability of the display screen.

In a possible example, the screen parameter includes a horizontal screen parameter. The horizontal screen parameter includes at least one of: the HBP, the HFP and the HAS.

The target value is determined by the electronic device adjusting the reference value under a second constraint condition. The second constraint condition refers to that a change amount of a line scanning period of the display screen after switching the MIPI frequency is lower than a second preset threshold.

For example, when a main frequency of the MIPI of the display screen is 514.5MHz, a line scanning period is measured to be 7.18us. In a case that the MIPI frequency is switched to an auxiliary frequency 529MHz, fine adjustment is performed on the screen parameter based on the reference value of the screen parameter, the line scanning period is measured synchronously, and a value of the screen parameter subjected to the fine adjustment under a situation of line scanning period being 7.18us is determined to be the target value when. The above preset FPS calculation equation is only a theoretical equation. In fact, the accuracy of the reference value is not high due to a physical difference of the device. The MIPI transmission frequency and the value of the screen parameter may be actually quite different, differences of MHz and tens or hundreds respectively. Meanwhile, the horizontal screen parameter of the display screen has a great influence on the display stability. Therefore, it may be considered that the value of the horizontal screen parameter is modified based on an actual detection result to improve the display stability.

In addition, when the screen parameter merely includes a vertical screen parameter. The vertical screen parameter includes at least one of: the VBP, the VFP and the VAS. The target value may be equal to the reference value, that is, adjusting a porch value in a vertical direction has no influence on the line scanning period.

It may be seen that, in this example, in a situation that the screen parameter includes the horizontal screen parameter, the electronic device may correct the reference value based on a constraint condition of the line scanning period in combination with an actual detection result, thereby improving the stability of the display screen subjected to the frequency hopping switching operation.

In a possible example, the electronic device includes a baseband processor (BP) and an application processor (AP). The AP is connected with a modem. That the electronic device obtains the at least one detection value of the first frequency and the detection value of the second frequency includes the following. The BP is controlled to perform: obtaining the at least one detection value of the first frequency and reporting the at least one detection value of the first frequency to the AP through a preset channel. The AP is controlled to perform: receiving the at least one detection value of the first frequency from the BP, and obtaining the detection value of the second frequency.

That the electronic device detects whether the electromagnetic interference occurs in the electronic device based on the at least one detection value of the first frequency and the detection value of the second frequency includes the following. The AP is controlled to detect whether the electronic interference occurs in the electronic device based on the at least one detection value of the first frequency and the detection value of the second frequency.

The preset channel is a CCCI (Cross Core Communication Interface) channel between the modem and the AP.

It may be seen that, in this example, the AP and the BP of the electronic device may be interacted with each other to complete detection for the electromagnetic interference. In detail, the BP collects at least one detection value of the first frequency and sends the at least one detection value of the first frequency to the AP. The AP determines the electromagnetic interference based on the MIPI frequency of the display screen locally detected in combination with the at least one detection value of the first frequency. Since the AP has a strong processing ability, the detection result may be obtained quickly and efficiently.

In a possible example, the electronic device includes a baseband processor (BP) and an application processor (AP). The AP is connected with a modem. That the electronic device obtains the at least one detection value of the first frequency and the detection value of the second frequency includes the following. The BP is controlled to perform: obtaining the at least one detection value of the first frequency; and receiving the detection value of the second frequency from the AP through a preset channel. The AP is controlled to perform: obtaining the detection value of the second frequency and sending the detection value of the second frequency to the BP.

That the electronic device detects whether the electromagnetic interference occurs in the electronic device based on the at least one detection value of the first frequency and the detection value of the second frequency includes: controlling the BP to detect whether the electronic interference occurs in the electronic device based on the at least one detection value of the first frequency and the detection value of the second frequency.

It may be seen that, in this example, the AP and the BP of the electronic device may be interacted with each other to complete detection for the electromagnetic interference. In detail, the BP collects the at least one detection value of the first frequency, and the AP detects the MIPI frequency of the display screen and sends the MIPI frequency to the BP. The BP determines the electromagnetic interference the received MIPI frequency in combination with the MIPI frequency of the display screen detected at the BP. Since there is a small amount of data transmitted between the AP and the BP, the delay is low and the real-time performance is high, the electromagnetic interference may be detected efficiently.

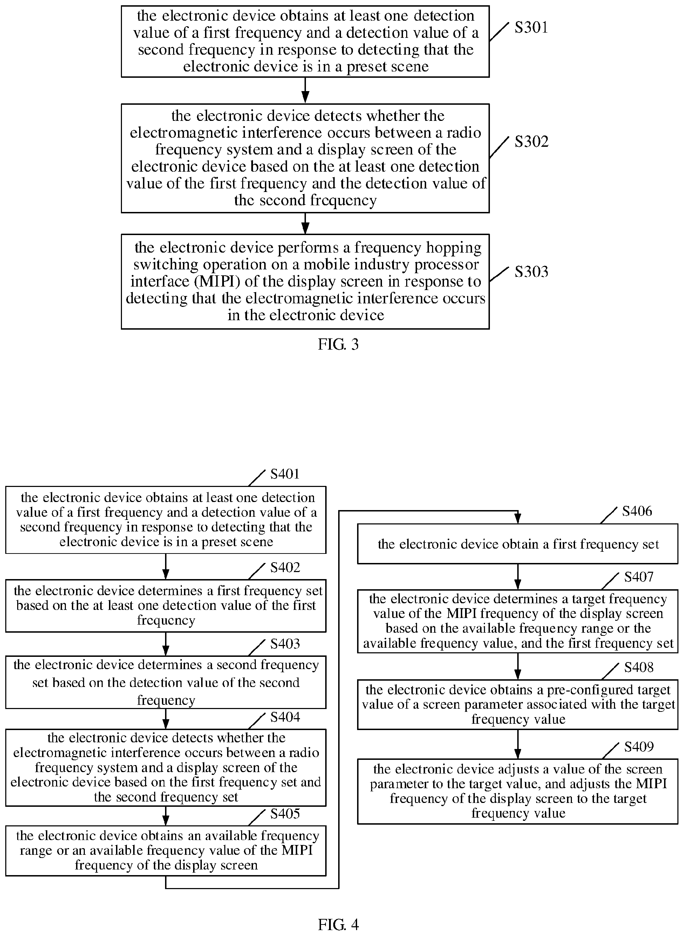

Consistent with the above embodiment illustrated in FIG. 2, as illustrated in FIG. 3, FIG. 3 is a flow chart illustrating a method for controlling electromagnetic interference according to another embodiment of the disclosure. The method is applied to the electronic device illustrated in FIG. 1. The electronic device includes multiple wireless communication modules. As illustrated in FIG. 3, the method for controlling electromagnetic interference includes the following.

At block S301, the electronic device obtains at least one detection value of a first frequency and a detection value of a second frequency in response to detecting that the electronic device is in a preset scene. The first frequency is a communication frequency of a radio frequency system. The second frequency is an MIPI frequency of the display screen. The preset scene includes a screen-on scene.

At block S302, the electronic device detects whether the electromagnetic interference occurs between the radio frequency system and the display screen of the electronic device based on the at least one detection value of the first frequency and the detection value of the second frequency.

At block S303, the electronic device performs a frequency hopping switching operation on a mobile industry processor interface (MIPI) of the display screen in response to detecting that the electromagnetic interference occurs in the electronic device.

It may be seen that, in embodiments of the disclosure, the electronic device detects whether the electromagnetic interference occurs between the radio frequency system and the display screen of the electronic device in response to detecting that the electronic device is in the preset scene. The preset scene includes the screen-on scene. The electronic device performs the frequency hopping switching operation on the MIPI of the display screen in response to detecting that the electromagnetic interference occurs in the electronic device. Since the electronic device performs frequency hopping on the MIPI frequency of the display screen, the MIPI frequency of the display screen may be adjusted to a frequency band which does not interfere with a communication frequency of the RF system, thereby improving the communication stability in the screen-on scene.

In addition, since the electronic device may quickly determine whether a frequency currently used by the MIPI of the display screen may generate the electromagnetic interference with any detection value in the first frequency set based on the frequency comparison, an electromagnetic interference scene may be quickly positioned based on a real-time detection value, and the detection efficiency is high.

Consistent with the above embodiment illustrated in FIG. 2, as illustrated in FIG. 4, FIG. 4 is a flow chart illustrating a method for controlling electromagnetic interference according to another embodiment of the disclosure. The method is applied to an electronic device. As illustrated in FIG. 4, the method for controlling electromagnetic interference includes the following.

At block S401, the electronic device obtains at least one detection value of a first frequency and a detection value of a second frequency in response to detecting that the electronic device is in a preset scene. The first frequency is a communication frequency of a radio frequency system. The second frequency is an MIPI frequency of the display screen.

At block S402, the electronic device determines a first frequency set based on the at least one detection value of the first frequency. The first frequency set includes at least one communication frequency enabled by the radio frequency system in the preset scene.

At block S403, the electronic device determines a second frequency set based on the detection value of the second frequency. The second frequency set includes an MIPI frequency enabled by the display screen in the preset scene, and at least one division frequency and/or at least one multiplication frequency of the enabled MIPI frequency.

At block S404, the electronic device detects whether the electromagnetic interference occurs between the radio frequency system and the display screen of the electronic device based on the first frequency set and the second frequency set.

At block S405, the electronic device obtains an available frequency range or an available frequency value of the MIPI frequency of the display screen.

At block S406, the electronic device obtains a first frequency set. The first frequency set includes the at least one communication frequency enabled by the electronic device in the preset scene.

At block S407, the electronic device determines a target frequency value of the MIPI frequency of the display screen based on the available frequency range or the available frequency value, and the first frequency set.

At block S408, the electronic device obtains a pre-configured target value of a screen parameter associated with the target frequency value. The target value is associated with a reference value. The reference value is determined by the electronic device under a first constraint condition based on a preset FPS (frames per second) calculation equation and the target frequency value, the first constraint condition refers to that a change amount of FPS of the display screen after MIPI frequency switching is lower than a first preset threshold. The screen parameter includes at least one porch value of a horizontal back porch (HBP), a horizontal front porch (HFP), a vertical back porch (VBP), a vertical front porch (VFP), a vertical sync active (VSA), a horizontal sync active (HAS) in the preset FPS calculation equation.

At block S409, the electronic device adjusts a value of the screen parameter to the target value, and adjusts the MIPI frequency of the display screen to the target frequency value.

It may be seen that, in embodiments of the disclosure, the electronic device detects whether the electromagnetic interference occurs between the radio frequency system and the display screen of the electronic device in response to detecting that the electronic device is in the preset scene. The preset scene includes the screen-on scene. The electronic device performs the frequency hopping switching operation on the MIPI of the display screen in response to detecting that the electromagnetic interference occurs in the electronic device. Since the electronic device performs frequency hopping on the MIPI frequency of the display screen, the MIPI frequency of the display screen may be adjusted to a frequency band which does not interfere with a communication frequency of the RF system, thereby improving the communication stability in the screen-on scene.

In addition, since the electronic device may quickly determine whether a frequency currently used by the MIPI of the display screen may cause the electromagnetic interference with any detection value in the first frequency set based on the frequency comparison, an electromagnetic interference scene may be quickly positioned based on a real-time detection value, and the detection efficiency is improved.

In addition, since the multiplication frequency or the division frequency of the MIPI frequency of the display screen may also interfere with a device with a similar frequency band and cause the electromagnetic interference, an electromagnetic interference situation may be comprehensively and accurately detected by the frequency comparison in the first frequency set and the second frequency set, and the detection accuracy and comprehensiveness are improved.

In addition, the electronic device determines the target frequency value for the frequency hopping in real time after determining that electromagnetic interference occurs. The MIPI frequency of the display screen is adjusted to the target frequency value. Comparing with adjusting the communication frequency of the radio frequency system, the processing process is convenient and efficient, with low delay and high stability.

In addition, since the electronic device determines the target frequency value of the MIPI based on the available frequency range or the available frequency value of the MIPI of the display screen, and the first frequency set, the electronic device is prevented from being interfered by the MIPI of the display screen in the current preset scene due to the radio frequency system using any frequency in the first frequency set, and the communication stability of the radio frequency system is improved.

In addition, a part of parameters of the display screen of the electronic device may change after the frequency hopping switching operation, and the FPS is a parameter index to ensure the display stability of the display screen after the frequency hopping switching operation. Therefore, the electronic device may predetermine the target value of the screen parameter that needs to be adjusted synchronously during the frequency hopping switching operation based on the preset FPS calculation equation, thereby improving the display stability of the display screen.

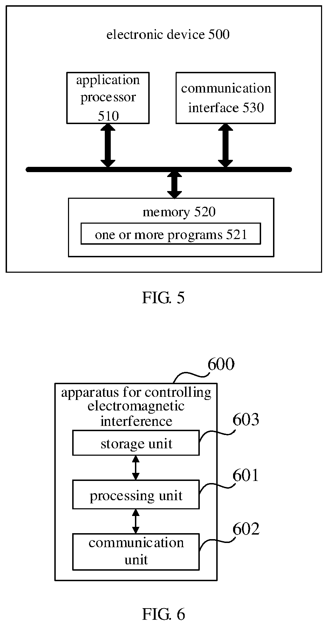

Consistent with the above embodiment illustrated in FIG. 2, FIG. 3, and FIG. 4, as illustrated in FIG. 5, FIG. 5 is a block diagram illustrating an electronic device 500 according to embodiments of the disclosure. As illustrated in FIG. 5, the electronic device 500 includes an application processor 510, a memory 520, a communication interface 530, and one or more programs 521. The one or more programs 521 are stored in the memory 520 and configured to be executed by the application processor 510. The one or more programs 521 include instructions for executing following.

It is detected whether electromagnetic interference occurs between a radio frequency system and a display screen of an electronic device in response to detecting that the electronic device is in a preset scene. The preset scene including a screen-on scene.

A frequency hopping switching operation is performed on a mobile industry processor interface (MIPI) of the display screen in response to detecting that the electromagnetic interference occurs in the electronic device.

It may be seen that, in embodiments of the disclosure, the electronic device detects whether the electromagnetic interference occurs between the radio frequency system and the display screen of the electronic device in response to detecting that the electronic device is in the preset scene. The preset scene includes the screen-on scene. The frequency hopping switching operation is performed on the MIPI of the display screen in response to detecting that the electromagnetic interference occurs in the electronic device. Since the electronic device performs frequency hopping on the MIPI frequency of the display screen, the MIPI frequency of the display screen may be adjusted to a frequency band which does not interfere with a communication frequency of the RF system, thereby improving the communication stability in the screen-on scene.

In a possible example, in response to detecting whether the electromagnetic interference occurs between the radio frequency system and the display screen of the electronic device, the instructions in the one or more programs are configured to perform following. At least one detection value of a first frequency and a detection value of a second frequency are obtained. The first frequency is a communication frequency of the radio frequency system, and the second frequency is the MIPI frequency of the display screen. It is detected whether the electromagnetic interference occurs between the radio frequency system and the display screen of the electronic device based on the at least one detection value of the first frequency and the detection value of the second frequency.

In a possible example, in response to detecting whether the electromagnetic interference occurs between the radio frequency system and the display screen of the electronic device based on the at least one detection value of the first frequency and the detection value of the second frequency, the instructions in the one or more programs are configured to perform following. A first frequency set is determined based on the at least one detection value of the first frequency. The first frequency set includes at least one communication frequency enabled by the radio frequency system in the preset scene. A second frequency set is determined based on the detection value of the second frequency. The second frequency set includes an MIPI frequency enabled by the display screen in the preset scene, and at least one division frequency and/or at least one multiplication frequency of the enabled MIPI frequency. It is detected whether the electromagnetic interference occurs between the radio frequency system and the display screen of the electronic device based on the first frequency set and the second frequency set.

In a possible example, in response to performing the frequency hopping switching operation on the mobile industry processor interface (MIPI) of the display screen, the instructions in the one or more programs are configured to perform following. A target frequency value of an MIPI frequency of the display screen is determined. The MIPI frequency of the display screen is adjusted to the target frequency value.

In a possible example, in response to determining the target frequency value of the MIPI frequency of the display screen, the instructions in the one or more programs are configured to perform following. An available frequency range or an available frequency value of the MIPI frequency of the display screen is obtained. A first frequency set is obtained. The first frequency set includes at least one communication frequency enabled by the electronic device in the preset scene. The target frequency value of the MIPI frequency of the display screen is determined based on the available frequency range or the available frequency value, and the first frequency set.

In a possible example, in response to adjusting the MIPI frequency of the display screen to the target frequency, the instructions in the one or more programs are configured to perform following. A pre-configured target value of a screen parameter associated with the target frequency value. The target value is associated with a reference value, and the reference value is determined by the electronic device under a first constraint condition based on a preset FPS (frames per second) calculation equation and the target frequency value. The first constraint condition refers to that a change amount of FPS of the display screen after MIPI frequency switching is lower than a first preset threshold, and the screen parameter includes at least one porch value of a horizontal back porch (HBP), a horizontal front porch (HFP), a vertical back porch (VBP), a vertical front porch (VFP), a vertical sync active (VSA), a horizontal sync active (HAS) in the preset FPS calculation equation. A value of the screen parameter is adjusted to the target value, and the MIPI frequency of the display screen is adjusted to the target frequency value.

In a possible example, the screen parameter includes a horizontal screen parameter, and the horizontal screen parameter includes at least one of the HBP, the HFP and the HAS. The target value is determined by the electronic device adjusting the reference value under a second constraint condition, the second constraint condition refers to that a change amount of a line scanning period of the display screen is lower than a second preset threshold after the MIPI frequency is switched.

In a possible example, the electronic device includes a baseband processor (BP) and an application processor (AP), and the AP is connected with a modem. In response to obtaining the at least one detection value of the first frequency and the detection value of the second frequency, the instructions in the one or more programs are configured to perform following. The BP is controlled to perform: obtaining the at least one detection value of the first frequency and reporting the at least one detection value of the first frequency to the AP through a preset channel. The AP is controlled to perform: receiving the at least one detection value of the first frequency from the BP, and obtaining the detection value of the second frequency.

In response to detecting whether the electromagnetic interference occurs in the electronic device based on the at least one detection value of the first frequency and the detection value of the second frequency, the instructions in the one or more programs are configured to perform: controlling the AP to detect whether the electronic interference occurs in the electronic device based on the at least one detection value of the first frequency and the detection value of the second frequency.

In a possible example, the electronic device includes a baseband processor (BP) and an application processor (AP), and the AP is connected with a modem. In response to obtaining the at least one detection value of the first frequency and the detection value of the second frequency, the instructions in the one or more programs are configured to perform following. The BP is controlled to perform: obtaining the at least one detection value of the first frequency, and receiving the detection value of the second frequency from the AP through a preset channel. The AP is controlled to perform: obtaining the detection value of the second frequency and sending the detection value of the second frequency to the BP.

In response to detecting whether the electromagnetic interference occurs in the electronic device based on the at least one detection value of the first frequency and the detection value of the second frequency, the instructions in the one or more programs are configured to perform: controlling the BP to detect whether the electronic interference occurs in the electronic device based on the at least one detection value and the detection value of the second frequency.

The above mainly introduces the solution of embodiments of the disclosure from the execution process of the method. It may be understood that, in order to implement the above functions, the electronic device includes a corresponding hardware structure and/or software module for executing each function. The skilled in the art should easily realize that, in combination with units and algorithm steps of each example described in the embodiments provided herein, the present disclosure may be implemented in the form of hardware or a combination of hardware and computer software. Whether a certain function is executed by the hardware or the computer software-driven hardware depends on a specific application and a design constraint of the technical solution. Those skilled in the art may use different methods to implement the described functions for each specific application, but such implementation should not be considered to beyond the scope of the disclosure.

Embodiments of the disclosure may divide the function units of the electronic device based on above method example. For example, each function unit may be divided corresponding to each function, or two or more functions may be integrated into one processing unit. The above-mentioned integrated unit may be implemented in the form of hardware or a software function unit. It should be noted that the division of units in embodiments of the disclosure is illustrative, which is only a logical function division, and there may be another division modes in an actual implementation.

FIG. 6 is a block diagram illustrating a composition of function units of an apparatus 600 for controlling electromagnetic interference according to embodiments of the disclosure. The apparatus 600 for controlling the electromagnetic interference may be applied to an electronic device, and includes a processing unit 601 and a communication unit 602.

The processing unit 601 is configured to detect whether electromagnetic interference occurs between a radio frequency system and a display screen of an electronic device in response to detecting that the electronic device is in a preset scene, the preset scene including a screen-on scene, and to perform a frequency hopping switching operation on a mobile industry processor interface (MIPI) of the display screen through the communication unit 602 in response to detecting that the electromagnetic interference occurs in the electronic device.

The apparatus 600 for controlling the electromagnetic interference may also include a storage unit 603. The storage unit 603 is configured to store program codes and data of the electronic device. The processing unit 601 may be a processor. The communication unit 602 may be a touch screen or a transceiver. The storage unit 603 may be a memory.

It may be seen that, in embodiments of the disclosure, the electronic device detects whether the electromagnetic interference occurs between the radio frequency system and the display screen of the electronic device in response to detecting that the electronic device is in the preset scene. The preset scene includes the screen-on scene. The frequency hopping switching operation is performed on the MIPI of the display screen in response to detecting that the electromagnetic interference occurs in the electronic device. Since the electronic device performs frequency hopping on an MIPI frequency of the display screen, the MIPI frequency of the display screen may be adjusted to a frequency band which does not interfere with a communication frequency of the radio frequency (RF) system, thereby improving the communication stability in the screen-on scene.

In a possible example, in response to detecting whether the electromagnetic interference occurs between the radio frequency system and the display screen of the electronic device, the processing unit 601 is configured to: obtain at least one detection value of a first frequency and a detection value of a second frequency though the communication unit 602, in which the first frequency is a communication frequency of the radio frequency system, and the second frequency is the MIPI frequency of the display screen; and detect whether the electromagnetic interference occurs between the radio frequency system and the display screen of the electronic device based on the at least one detection value of the first frequency and the detection value of the second frequency.

In a possible example, in response to detecting whether the electromagnetic interference occurs between the radio frequency system and the display screen of the electronic device based on the at least one detection value of the first frequency and the detection value of the second frequency, the processing unit 601 is configured to: determine a first frequency set based on the at least one detection value of the first frequency, in which the first frequency set includes at least one communication frequency enabled by the radio frequency system in the preset scene; determine a second frequency set based on the detection value of the second frequency, in which the second frequency set includes an MIPI frequency enabled by the display screen in the preset scene, and at least one division frequency and/or at least one multiplication frequency of the enabled MIPI frequency; and detect whether the electromagnetic interference occurs between the radio frequency system and the display screen of the electronic device based on the first frequency set and the second frequency set.

In a possible example, in response to performing the frequency hopping switching operation on the mobile industry processor interface (MIPI) of the display screen, the processing unit 601 is configured to: determine a target frequency value of the MIPI frequency of the display screen; and adjusting the MIPI frequency of the display screen to the target frequency value.

In a possible example, in response to determining the target frequency value of the MIPI frequency of the display screen, the processing unit 601 is configured to: obtain an available frequency range or an available frequency value of the MIPI frequency of the display screen; obtain a first frequency set, in which the first frequency set includes at least one communication frequency enabled by the electronic device in the preset scene; and determine the target frequency value of the MIPI frequency of the display screen based on the available frequency range or the available frequency value, and the first frequency set.

In a possible example, in response to adjusting the MIPI frequency of the display screen to the target frequency, the processing unit 601 is configured to: obtain a pre-configured target value of a screen parameter associated with the target frequency value, in which the target value is associated with a reference value, the reference value is determined by the electronic device under a first constraint condition based on a preset FPS (frames per second) calculation equation and the target frequency value, the first constraint condition refers to that a change amount of FPS of the display screen after MIPI frequency switching is lower than a first preset threshold, and the screen parameter includes at least one porch value of a horizontal back porch (HBP), a horizontal front porch (HFP), a vertical back porch (VBP), a vertical front porch (VFP), a vertical sync active (VSA), a horizontal sync active (HAS) in the preset FPS calculation equation; and adjust a value of the screen parameter to the target value, and adjust the MIPI frequency of the display screen to the target frequency value.

In a possible example, the screen parameter includes a horizontal screen parameter, and the horizontal screen parameter includes at least one of the HBP, the HFP and the HAS.

The target value is determined by the electronic device by adjusting the reference value under a second constraint condition, and the second constraint condition refers to that a change amount of a line scanning period of the display screen is lower than a second preset threshold after switching the MIPI frequency.

In a possible example, the electronic device includes a baseband processor (BP) and an application processor (AP), and the AP is connected with a modem. In response to obtaining the at least one detection value of the first frequency and the detection value of the second frequency, the processing unit 601 is configured to: control the BP to perform: obtaining the at least one detection value of the first frequency and reporting the at least one detection value of the first frequency to the AP through a preset channel; and control the AP to perform: receiving the at least one detection value of the first frequency from the BP, and obtaining the detection value of the second frequency.

In response to detecting whether the electromagnetic interference occurs in the electronic device based on the at least one detection value of the first frequency and the detection value of the second frequency, the processing unit 601 is configured to control the AP to detect whether the electronic interference occurs in the electronic device based on the at least one detection value of the first frequency and the detection value of the second frequency.

In a possible example, the electronic device includes a baseband processor (BP) and an application processor (AP), and the AP is connected with a modem. In response to obtaining the at least one detection value of the first frequency and the detection value of the second frequency, the processing unit 601 is configured to: control the BP to perform: obtaining the at least one detection value of the first frequency, and receiving the detection value of the second frequency from the AP through a preset channel; and control the AP to perform: obtaining the detection value of the second frequency and sending the detection value of the second frequency to the BP.

In response to detecting whether the electromagnetic interference occurs in the electronic device based on the at least one detection value of the first frequency and the detection value of the second frequency, the processing unit 601 is configured to control the BP to detect whether the electronic interference occurs in the electronic device based on the at least one detection value and the detection value of the second frequency.

Embodiments of the disclosure also provide a computer readable storage medium. The computer readable storage medium is configured to store a computer program for exchanging electronic data. The computer program causes a computer to execute a part or all of the steps of any method as described in the above method embodiments. The computer includes an electronic device.

Embodiments of the disclosure further provide a computer program product. The computer program product includes a non-transitory computer readable storage medium having a computer program stored thereon. The computer program may be operated to enable a computer to execute a part or all of the steps of any method as described in the above method embodiments. The computer program product may be a software installation package. The computer includes an electronic device.

It should be noted that, for the sake of simple description, all the above method embodiments are expressed as a series of action combinations. However, the skilled in the art should know that the disclosure is not limited by the described sequence of actions because some actions may be performed in other sequences or at the same time based on the disclosure. Secondly, the skilled in the art should also know that, embodiments described in the specification are all preferred embodiments, and the actions and modules involved are not necessary for the disclosure.

In the above embodiments, descriptions for respective embodiments have their own emphasis. For a part not described in detail in one embodiment, reference may be made to relevant descriptions of other embodiments.

In several embodiments provided in the disclosure, it should be understood that, the disclosed apparatus may be implemented in other ways. For example, the apparatus embodiments described above are only illustrative. For example, the division of the above units is only a logical function division. In an actual implementation, there may be another division modes, for example, multiple units or components may be combined or integrated into another system, or some features may be ignored or not executed. On the other hand, a mutual coupling, a direct coupling or a communication connection illustrated or discussed may be an indirect coupling or a communication connection through some interfaces, apparatus or units, and may be in electrical or other forms.

The units described above as separated components may or may not be physically separated. The components displayed as the units may or may not be physical units, that is, the components may be located in one place or distributed to multiple network units. A part or all of the units may be selected based on an actual requirement to achieve the purpose of this embodiment.

In addition, each function unit in each embodiment of the disclosure may be integrated into one processing unit, or may physically exist separately. Two or more function units may also be integrated into one unit. The above integrated units may be implemented in the form of hardware or a software function unit.

If the above integrated unit is implemented in the form of the software function unit and sold or used as an independent product, the integrated unit may be stored in a computer readable memory. Based on this understanding, the technical solution of the disclosure may be essentially, or the part of the technical solution that contributes to the prior art, or all or a part of the technical solution may be embodied in the form of the software product. The computer software product is stored in a memory and includes several instructions to enable a computer device, which may be a personal computer, a server or a network device, etc., to execute all or a part of the actions of the above methods in various embodiments of the disclosure. The above memory includes various media that may store the program codes, such as a USB flash disk, a ROM (read-only memory), a RAM (random access memory), a mobile hard disk, a magnetic disk or an optical disk.

The skilled in the art may understand that the all or part of the actions in the various methods of the above embodiments may be completed by a program instructing related hardware. The program may be stored in a computer readable memory. The computer readable memory may include a flash disk, a read-only memory (ROM), a random access memory (RAM), a magnetic disk or an optical disk, etc.

Detailed description is made above to the embodiments of the disclosure. Detailed examples are applied to illustrate the principles and implementations of the disclosure. The descriptions of the above embodiments are only used to help understand the methods and core ideas of the disclosure. Meanwhile, the skilled in the art may make some changes in a detailed implementation and a scope of the disclosure based on the idea of the disclosure. In conclusion, the contents of this specification should not be construed as limitations of the disclosure.

**Claims**

1. A method for controlling electromagnetic interference, comprising:

   detecting whether electromagnetic interference occurs between a radio frequency system and a display screen of an electronic device in response to detecting that the electronic device is in a preset scene, the preset scene comprising a screen-on scene; and
   performing a frequency hopping switching operation on a mobile industry processor interface (MIPI) of the display screen in response to detecting that the electromagnetic interference occurs in the electronic device.

2. The method of claim 1, wherein detecting whether the electromagnetic interference occurs between the radio frequency system and the display screen of the electronic device comprises:

   obtaining at least one detection value of a first frequency and a detection value of a second frequency, wherein the first frequency is a communication frequency of the radio frequency system, and the second frequency is an MIPI frequency of the display screen; and
   detecting whether the electromagnetic interference occurs between the radio frequency system and the display screen of the electronic device based on the at least one detection value of the first frequency and the detection value of the second frequency.

3. The method of claim 2, wherein detecting whether the electromagnetic interference occurs between the radio frequency system and the display screen of the electronic device based on the at least one detection value of the first frequency and the detection value of the second frequency comprises:

   determining a first frequency set based on the at least one detection value of the first frequency, wherein the first frequency set comprises at least one communication frequency enabled by the radio frequency system in the preset scene;
   determining a second frequency set based on the detection value of the second frequency, wherein the second frequency set comprises an MIPI frequency enabled by the display screen in the preset scene, and at least one division frequency and/or at least one multiplication frequency of the enabled MIPI frequency; and
   detecting whether the electromagnetic interference occurs between the radio frequency system and the display screen of the electronic device based on the first frequency set and the second frequency set.

4. The method of any of claims 1-3, wherein performing the frequency hopping switching operation on the mobile industry processor interface (MIPI) of the display screen comprises:

   determining a target frequency value of an MIPI frequency of the display screen; and
   adjusting the MIPI frequency of the display screen to the target frequency value.

5. The method of claim 4, wherein determining the target frequency value of the MIPI frequency of the display screen comprises:

obtaining an available frequency range or an available frequency value of the MIPI frequency of the display screen;

obtaining a first frequency set, wherein the first frequency set comprises at least one communication frequency enabled by the electronic device in the preset scene; and

determining the target frequency value of the MIPI frequency of the display screen based on the available frequency range or the available frequency value, and the first frequency set.

6. The method of claim 5, wherein adjusting the MIPI frequency of the display screen to the target frequency value comprises:

obtaining a pre-configured target value of a screen parameter associated with the target frequency value, wherein the target value is associated with a reference value, the reference value is determined by the electronic device under a first constraint condition based on a preset FPS (frames per second) calculation equation and the target frequency value, the first constraint condition refers to that a change amount of FPS of the display screen after MIPI frequency switching is lower than a first preset threshold, and the screen parameter comprises at least one porch value of a horizontal back porch (HBP), a horizontal front porch (HFP), a vertical back porch (VBP), a vertical front porch (VFP), a vertical sync active (VSA), a horizontal sync active (HAS) in the preset FPS calculation equation; and

adjusting a value of the screen parameter to the target value, and adjusting the MIPI frequency of the display screen to the target frequency value.

7. The method of claim 6, wherein the screen parameter comprises a horizontal screen parameter, and the horizontal screen parameter comprises at least one of the HBP, the HFP and the HAS; and

the target value is determined by the electronic device adjusting the reference value under a second constraint condition, wherein the second constraint condition refers to that a change amount of a line scanning period of the display screen after switching the MIPI frequency is lower than a second preset threshold.

8. The method of any of claims 2-7, wherein the electronic device comprises a baseband processor (BP) and an application processor (AP), and the AP is connected with a modem; obtaining the at least one detection value of the first frequency and the detection value of the second frequency comprises:

controlling the BP to perform: obtaining the at least one detection value of the first frequency and reporting the at least one detection value of the first frequency to the AP through a preset channel; and

controlling the AP to perform: receiving the at least one detection value of the first frequency from the BP, and obtaining the detection value of the second frequency; and

detecting whether the electromagnetic interference occurs in the electronic device based on the at least one detection value of the first frequency and the detection value of the second frequency comprises:

controlling the AP to detect whether the electronic interference occurs in the electronic device based on the at least one detection value of the first frequency and the detection value of the second frequency.

9. The method of any of claims 2-7, wherein the electronic device comprises a baseband processor (BP) and an application processor (AP), and the AP is connected with a modem; obtaining the at least one detection value of the first frequency and the detection value of the second frequency comprises:

controlling the BP to perform: obtaining the at least one detection value of the first frequency, and receiving the detection value of the second frequency from the AP through a preset channel; and

controlling the AP to perform: obtaining the detection value of the second frequency and sending the detection value of the second frequency to the BP; and

detecting whether the electromagnetic interference occurs in the electronic device based on the at least one detection value of the first frequency and the detection value of the second frequency comprises:

controlling the BP to detect whether the electronic interference occurs in the electronic device based on the at least one detection value and the detection value of the second frequency.

10. An apparatus for controlling electromagnetic interference, comprising a processing unit and a communication unit, wherein,

the processing unit is configured to detect whether electromagnetic interference occurs between a radio frequency system and a display screen of an electronic device in response to detecting that the electronic device is in a preset scene, the preset scene comprising a screen-on scene, and to perform a frequency hopping switching operation on a mobile industry processor interface (MIPI) of the display screen through the communication unit in response to detecting that the electromagnetic interference occurs in the electronic device.

11. The apparatus of claim 10, wherein when detecting whether the electromagnetic interference occurs between the radio frequency system and the display screen of the electronic device, the processing unit is configured to:

obtain at least one detection value of a first frequency and a detection value of a second frequency, wherein the first frequency is a communication frequency of the radio frequency system, and the second frequency is an MIPI frequency of the display screen; and
detect whether the electromagnetic interference occurs between the radio frequency system and the display screen of the electronic device based on the at least one detection value of the first frequency and the detection value of the second frequency.

12. The apparatus of claim 11, wherein when detecting whether the electromagnetic interference occurs between the radio frequency system and the display screen of the electronic device based on the at least one detection value of the first frequency and the detection value of the second frequency, the processing unit is configured to:

determining a first frequency set based on the at least one detection value of the first frequency, wherein the first frequency set comprises at least one communication frequency enabled by the radio frequency system in the preset scene;
determine a second frequency set based on the detection value of the second frequency, wherein the second frequency set comprises an MIPI frequency enabled by the display screen in the preset scene, and at least one division frequency and/or at least one multiplication frequency of the enabled MIPI frequency; and
detect whether the electromagnetic interference occurs between the radio frequency system and the display screen of the electronic device based on the first frequency set and the second frequency set.

13. The apparatus of any of claims 10-12, wherein when performing the frequency hopping switching operation on the mobile industry processor interface (MIPI) of the display screen, the processing unit is configured to:

determine a target frequency value of the MIPI frequency of the display screen; and
adjust the MIPI frequency of the display screen to the target frequency value.

14. The apparatus of claim 13, wherein when determining the target frequency value of the MIPI frequency of the display screen, the processing unit is configured to:

obtain an available frequency range or an available frequency value of the MIPI frequency of the display screen;
obtain a first frequency set, wherein the first frequency set comprises at least one communication frequency enabled by the electronic device in the preset scene; and
determine the target frequency value of the MIPI frequency of the display screen based on the available frequency range or the available frequency value, and the first frequency set.

15. The apparatus of claim 14, wherein when adjusting the MIPI frequency of the display screen to the target frequency value, the processing unit is configured to:

obtain a pre-configured target value of a screen parameter associated with the target frequency value, wherein the target value is associated with a reference value, the reference value is determined by the electronic device under a first constraint condition based on a preset FPS (frames per second) calculation equation and the target frequency value, the first constraint condition refers to that a change amount of FPS of the display screen after MIPI frequency switching is lower than a first preset threshold, and the screen parameter comprises at least one porch value of a horizontal back porch (HBP), a horizontal front porch (HFP), a vertical back porch (VBP), a vertical front porch (VFP), a vertical sync active (VSA), a horizontal sync active (HAS) in the preset FPS calculation equation; and
adjust a value of the screen parameter to the target value, and adjust the MIPI frequency of the display screen to the target frequency value.

16. The apparatus of claim 15, wherein the screen parameter comprises a horizontal screen parameter, and the horizontal screen parameter comprises at least one of the HBP, the HFP and the HAS; and
the target value is determined by the electronic device adjusting the reference value under a second constraint condition, the second constraint condition refers to that a change amount of a line scanning period of the display screen after switching the MIPI frequency is lower than a second preset threshold.

17. The apparatus of any of claims 11-16, wherein the electronic device comprises a baseband processor (BP) and an application processor (AP), and the AP is connected with a modem; when obtaining the at least one detection value of the first frequency and the detection value of the second frequency through the communication unit, the processing unit is configured to:

    control, through the communication unit, the BP to perform: obtaining the at least one detection value of the first frequency and reporting the at least one detection value of the first frequency to the AP through a preset channel; and
    control the AP to perform: receiving the at least one detection value of the first frequency from the BP, and obtaining the detection value of the second frequency; and
    when detecting whether the electromagnetic interference occurs in the electronic device based on the at least one detection value of the first frequency and the detection value of the second frequency, the processing unit is configured to:
    control the AP to detect whether the electronic interference occurs in the electronic device based on the at least one detection value of the first frequency and the detection value of the second frequency.

18. The apparatus of any of claims 11-17, wherein the electronic device comprises a baseband processor (BP) and an application processor (AP), and the AP is connected with a modem; when obtaining the at least one detection value of the first frequency and the detection value of the second frequency, the processing unit is configured to:

    control the BP to perform: obtaining the at least one detection value of the first frequency; and receiving the detection value of the second frequency from the AP through a preset channel; and
    control the AP to perform: obtaining the detection value of the second frequency and sending the detection value of the second frequency to the BP; and
    when detecting whether the electromagnetic interference occurs in the electronic device based on the at least one detection value of the first frequency and the detection value of the second frequency, the processing unit is configured to:
    control the BP to detect whether the electronic interference occurs in the electronic device based on the at least one detection value and the detection value of the second frequency.

19. An electronic device, comprising:

    a processor;
    a memory;
    a communication interface; and
    one or more programs, wherein, the one or more programs are stored in the memory and configured to be executed by the processor, and the one or more programs comprise instructions for executing the method according to any one of claims 1 to 9.

20. A computer readable storage medium, having a computer program for exchanging electronic data stored thereon, wherein the computer program causes a computer to execute the method according to any one of claims 1-9.

FIG. 1

| the electronic device detects whether electromagnetic interference occurs between a radio frequency system and a display screen of an electronic device in response to detecting that the electronic device is in a preset scene | S201 |
| the electronic device performs a frequency hopping switching operation on a mobile industry processor interface (MIPI) of the display screen in response to detecting that the electromagnetic interference occurs in the electronic device | S202 |

FIG. 2

the electronic device obtains at least one detection value of a first frequency and a detection value of a second frequency in response to detecting that the electronic device is in a preset scene | S301

the electronic device detects whether the electromagnetic interference occurs between a radio frequency system and a display screen of the electronic device based on the at least one detection value of the first frequency and the detection value of the second frequency | S302

the electronic device performs a frequency hopping switching operation on a mobile industry processor interface (MIPI) of the display screen in response to detecting that the electromagnetic interference occurs in the electronic device | S303

FIG. 3

S401

the electronic device obtains at least one detection value of a first frequency and a detection value of a second frequency in response to detecting that the electronic device is in a preset scene

S402

the electronic device determines a first frequency set based on the at least one detection value of the first frequency

S403

the electronic device determines a second frequency set based on the detection value of the second frequency

S404

the electronic device detects whether the electromagnetic interference occurs between a radio frequency system and a display screen of the electronic device based on the first frequency set and the second frequency set

S405

the electronic device obtains an available frequency range or an available frequency value of the MIPI frequency of the display screen

S406

the electronic device obtain a first frequency set

S407

the electronic device determines a target frequency value of the MIPI frequency of the display screen based on the available frequency range or the available frequency value, and the first frequency set

S408

the electronic device obtains a pre-configured target value of a screen parameter associated with the target frequency value

S409

the electronic device adjusts a value of the screen parameter to the target value, and adjusts the MIPI frequency of the display screen to the target frequency value

FIG. 4

electronic device 500

application processor 510

communication interface 530

memory 520

one or more programs 521

FIG. 5

600

apparatus for controlling electromagnetic interference

storage unit 603

processing unit 601

communication unit 602

FIG. 6

## INTERNATIONAL SEARCH REPORT

| International application No. |
|---|
| **PCT/CN2019/107883** |

### A. CLASSIFICATION OF SUBJECT MATTER

H04B 1/713(2011.01)i

According to International Patent Classification (IPC) or to both national classification and IPC

### B. FIELDS SEARCHED

Minimum documentation searched (classification system followed by classification symbols)

H04B; H04W; H04M

Documentation searched other than minimum documentation to the extent that such documents are included in the fields searched

Electronic data base consulted during the international search (name of data base and, where practicable, search terms used)

CNABS, CNTXT, CNKI, VEN: 电磁, 频率, 干扰, 显示屏, 显示器, 屏幕, 跳频, 切换, electromagnetism, frequency, disturb, interfere, display, screen, switch

### C. DOCUMENTS CONSIDERED TO BE RELEVANT

| Category* | Citation of document, with indication, where appropriate, of the relevant passages | Relevant to claim No. |
|---|---|---|
| Y | CN 108601037 A (GUANGDONG OPPO MOBILE TELECOMMUNICATIONS CORP., LTD.) 28 September 2018 (2018-09-28) description, paragraphs [0002]-[0079], and figures 1-6 | 1-5, 10-14, 19, 20 |
| Y | CN 106936515 A (GUANGDONG OPPO MOBILE TELECOMMUNICATIONS CORP., LTD.) 07 July 2017 (2017-07-07) description, paragraphs [0002]-[0116], and figures 1-5 | 1-5, 10-14, 19, 20 |
| A | CN 105827775 A (NUBIA TECHNOLOGY CO., LTD.) 03 August 2016 (2016-08-03) entire document | 1-20 |
| A | US 2009167753 A1 (SAMSUNG SDI CO., LTD.) 02 July 2009 (2009-07-02) entire document | 1-20 |

☐ Further documents are listed in the continuation of Box C.　　☑ See patent family annex.

| | | |
|---|---|---|
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **05 November 2019** | **25 November 2019** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/107883**

| Patent document cited in search report | | | Publication date (day/month/year) | Patent family member(s) | | | Publication date (day/month/year) |
|---|---|---|---|---|---|---|---|
| CN | 108601037 | A | 28 September 2018 | None | | | |
| CN | 106936515 | A | 07 July 2017 | WO | 2018205829 | A1 | 15 November 2018 |
| CN | 105827775 | A | 03 August 2016 | CN | 105827775 | B | 30 April 2019 |
| US | 2009167753 | A1 | 02 July 2009 | KR | 20090072017 | A | 02 July 2009 |
| | | | | CN | 101471026 | A | 01 July 2009 |
| | | | | JP | 2009163218 | A | 23 July 2009 |

Form PCT/ISA/210 (patent family annex) (January 2015)